Europäisches Patentamt

**(19)** European Patent Office

Office européen des brevets

**(11)** **EP 0 639 106 B1**

**(12)** **EUROPEAN PATENT SPECIFICATION**

**(45)** Date of publication and mention
of the grant of the patent:
**23.12.1998 Bulletin 1998/52**

**(21)** Application number: **93911158.9**

**(22)** Date of filing: **06.05.1993**

**(51)** Int. Cl.$^6$: **B01D 71/34**, B01D 69/02,
B01D 61/02

**(86)** International application number:
**PCT/US93/04352**

**(87)** International publication number:
**WO 93/22034 (11.11.1993 Gazette 1993/27)**

**(54) METHOD FOR THE PREPARATION OF A POLYVINYLIDENE FLUORIDE MICROPOROUS MEMBRANE**

VERFAHREN ZUR HERSTELLUNG EINER MIKROPORÖSEN POLYVINYLIDENFLUORID-MEMBRAN

PROCEDE DE FABRICATION D'UNE MEMBRANE MICROPOREUSE EN POLYFLUORURE DE VINYLIDENE

**(84)** Designated Contracting States:
**DE FR GB IT**

**(30)** Priority: **06.05.1992 US 879200**

**(43)** Date of publication of application:
**22.02.1995 Bulletin 1995/08**

**(73)** Proprietor: **COSTAR CORPORATION**
**Cambridge Massachusetts 02140 (US)**

**(72)** Inventors:
• **PACHECO, Manuel, M.**
**Billerica, MA 01821 (US)**
• **PACHECO, John, F.**
**Billerica, MA 01821 (US)**

**(74)** Representative:
**Hutchins, Michael Richard et al**
**FRY HEATH & SPENCE**
**The Old College**
**53 High Street**
**Horley Surrey RH6 7BN (GB)**

**(56)** References cited:
**EP-A- 0 111 663**          **EP-A- 0 233 709**
**WO-A-91/17204**          **DE-A- 2 632 185**
**US-A- 3 615 024**          **US-A- 3 642 668**
**US-A- 4 203 847**          **US-A- 4 303 848**
**US-A- 4 399 035**          **US-A- 4 946 889**

• **DATABASE WPI Week 8903, Derwent**
**Publications Ltd., London, GB; AN 89020416; &**
**JP,A,63 296 940 ( TORAY IND INC ) 5 December**
**1988**
• **PATENT ABSTRACTS OF JAPAN vol. 16, no. 338**
**(C-965)22 July 1992; & JP,A,4 100 522 ( NOK**
**CORP ) 2 April 1992**

**Description**

Field of the Invention

The invention relates to a method for the production of microporous polyvinylidene fluoride membranes. In particular, the invention relates to the production of microporous polyvinylidene fluoride membranes that differ significantly in both their structural and functional characteristics from conventional polyvinylidene fluoride microporous membranes.

Background of the Invention

Polyvinylidene fluoride microporous membranes, generally formed as thin sheets of substantially uniform thickness, have a sponge-like internal structure containing millions of channels. These channels define a tortuous flow path for liquids from one side of the membrane sheet to the other side. Conventional methods of producing these polyvinylidene fluoride (hereinafter "PVDF") membranes result in membranes having a matrix of intercommunicating channels, the channels having a substantially uniform width within narrow limits.

Microporous membranes act as screens or sieves and retain on their surface all particles larger than the given width of a channel (i.e. pore diameter). Entrapment on the membrane surface of particles of approximately the pore diameter will rapidly plug the membrane irreversibly, leading to rapid decline in flow rate. Due to the tortuous nature of the flow channels in conventional microporous membranes, significant hydraulic pressure is needed to force liquids from one side of the membrane to the other. As the membranes clog, this pressure necessarily increases.

Conventionally-produced PVDF membranes are commercially available with average pore sizes (i.e. pore diameters) in the range from about 0.10 μm to about 5.0 μm. The smallest of these conventional pore sizes will retain some large viruses and most bacteria. However, most viruses and some bacteria are not retained. In addition, the smallest of these conventional pore sizes will not retain large macromolecules. Attempts to produce microporous membrane filters having pore sizes less than about 0.10 μm have generally led to problems of very slow flow because of the small pore size, and to problems of rapid plugging.

Conventional solvent-casting procedures for producing microporous PVDF membranes rely on the use of a solvent such as acetone for the PVDF polymer. Nevertheless, acetone is usually not thought of as a solvent for this particular polymer because it is exceedingly difficult to dissolve any appreciable quantity of PVDF in acetone at room temperature. In order to dissolve a sufficient quantity to form an adequately viscous solution for use in practising conventional methods, the acetone must be heated close to its boiling point of about 50°C. This produces severe constraints on conventional methods since the initial mixing of PVDF must occur at an elevated temperature.

Examples of prior art methods of forming microporous membranes are the methods disclosed in WO-A-91/17204, US-A-3642668, US-A-4946889, JP-A-63296940, US-A-4399035, US-A-4203847, EP-A-0233709 and DE-A-2632185.

US-A-4399035 discloses hollow fibre PVDF membranes prepared by solution casting and coagulation of the film with non-solvent. Mixtures of good and "poor" solvents may be used in the casting solution. Water, MeOH and EtOH are disclosed as coagulating baths liquids, but there is no mention of adding a poor solvent to the coagulating bath.

JP-A-63-296940 discloses PVDF membranes prepared by solution casting and coagulation of the film with non-solvent. The casting solutions comprise DMSO and compounds labelled as "non-solvents", such as water, formamide, butanol, ethylene glycol, glycerine, urea or $CaCl_2$, or polyethoxylated surfactants. Water is mentioned as coagulant.

US-A-4 203 84 discloses PVDF membranes prepared by solution casting and coagulation of the film with non-solvent. According to the claims, acetone, although not considered as a "good" solvent, is used as the preferred solvent for casting. Mixtures of acetone and water are used as formation bath liquids. Mention is made of methanol and ethanol as possible nonsolvents for the formation bath (col.8, l.61-62).

US-A-4 203 847 discloses PVDF membranes prepared by solution casting and coagulation of the film with non-solvent. Acetone is used as the preferred solvent. Mixtures of acetone and dimethylformamide are mentioned as possible casting solution solvents (col.18, l.18). Various mixtures suitable as formation bath liquids are mentioned (col.18, l.19-23).

DE-A-26 32 185 discloses the preparation of PVDF (copolymers) membrane prepared by casting a solution followed by coagulation with a non-solvent. The casting solution may comprises two solvents with different solvating power, as well as non-solvent. The only non-solvent mentioned as coagulating bath is water. Inclusion of solvents in the coagulation bath is not addressed.

JP-A-4-100522 discloses hollow fibre PVDF membranes prepared by solution casting and coagulation of the film with non-solvent. Mixtures of a main solvent such as dimethylacetamide with a ketone-type co-solvent such as acetone and a non-solvent are used in the casting solution. The coagulating bath comprises an aqueous solution of the main solvent

US-A-3615024 discusses the wet phase inversion process for the preparation of polymeric membranes and contains general remarks concerning suitable components of casting solutions and coagulation baths. PVDF membranes

2

are not mentioned.

## Summary of the Invention

The present invention provides a process for making a family of microporous PVDF membranes that differ substantially from conventional PVDF membranes in their pore size, methanol bubble point, flow rate, and surface area.

In a first aspect, the invention provides a method of making a microporous membrane as defined in claim 1

Particular and preferred aspects of the invention are as set forth in the dependent claims appended hereto.

A microporous PVDF membrane formed by the process of the invention has a flow rate of solution per unit area across the membrane that is substantially greater (i.e. at least 30% greater) than the flow rate of a solution per unit area in conventional microporous PVDF membranes of similar pore size and similar thickness. PVDF membranes formed in accordance with the process of the invention can also have an average pore size less than about 0.10 μm. Particular membranes can have average pore sizes down to about 0.02 μm.

The microporous PVDF membranes formed in accordance with the invention have a defined microstructure which includes intercommunicating flow channels extending from one surface of the membrane to an opposite surface. At least one of the surfaces of the membrane has a macro structure. In one embodiment, the macro structure is defined by a plurality of substantially spherical features having a size substantially greater than the average pore size. In another embodiment, the macro structure is defined by a plurality of flattened modules covering substantially the entire surface of the membrane.

In the method of the invention, a polymer is dissolved in a mixing solution containing a solvent for the PVDF and at least one co-solvent, and the dissolved polymer then is applied to a solid substrate as a thin film. The thin film on the substrate is converted to a microporous membrane by displacing the solvents from the thin film and replacing them with a nonsolvent for the PVDF polymer. This occurs in a formation bath. The formation bath is a mixture of a nonsolvent for the polymer plus said at least one co-solvent used in the mixing solution.

One particular aspect of the process of the invention is the use of a solvent:co-solvent system for the polymer, such as N-methyl-2-pyrrolidone:butylacetate or N-methyl-2-pyrrolidone:formamide. The solvent:co-solvent system is adequate to dissolve the polymer at temperatures between about room temperature and about 50°C. Another particular aspect of the process is that formation of the microporous membrane in the formation bath can occur at substantially reduced temperatures. In one embodiment of the invention, formation of the membrane of the invention is preferably accomplished at 0°C.

The process involves forming a thin layer of a solution of the PVDF polymer on a substrate, the PVDF dissolved in a solvent and co-solvent. The layered substrate is then passed into a formation bath including at least the co-solvent plus a nonsolvent, both the co-solvent and nonsolvent miscible with each other. The layer of PVDF polymer is thereby transformed into a porous membrane, formed on the substrate in the formation bath. The membrane is removed from the substrate and then dried. A wide variety of structural and functional properties of the membranes can be achieved in the process by selecting a temperature for either, or both, the mixing solution and formation bath and also selecting a concentration of co-solvent and nonsolvent for the formation bath.

## Description of the Drawings

Fig. 1 is a scanning electron micrograph of the top surface of a conventional microporous PVDF membrane. The bar represents a length of 10 microns;

Fig. 2 is a scanning electron micrograph of the top surface of a microporous PVDF membrane of the present invention. The bar represents a length of 10 microns;

Fig. 3 is a scanning electron micrograph of the cross-section of the conventional PVDF microporous membrane of Fig. 1. The bar represents a length of 10 microns;

Fig. 4 is a scanning electron micrograph of the cross-section of the microporous PVDF membrane of Fig. 2. The bar represents a length of 10 microns;

Fig. 5 is a scanning electron micrograph of the top surface of another embodiment of the PVDF membrane of the present invention. The bar represents a length of 10 microns;

Fig. 6 is a scanning electron micrograph of the bottom surface of the conventional microporous PVDF membrane of Fig. 1. The bar represents the length of a micron;

Fig. 7 is a scanning electron micrograph of the bottom surface of the microporous PVDF membrane of Fig. 2. The bar represents the length of 10 microns;

Fig. 8 is a schematic diagram of the apparatus needed for a continuous method of the present invention.

Detailed Description of the Invention

A. Microporous PVDF Membranes

The present invention provides a process for preparing a family of microporous PVDF membranes having nominal pore sizes ranging from about 0.02 μm to about 2.0 μm. The term "nominal pore size" refers to the minimum size of particles that will be retained on the membrane. Thus, a membrane with a nominal pore size of about 0.45 μm means that particles greater than about 0.45 μm will be retained on the membrane, those less than about 0.45 μm will pass through and will not be retained.

The functional properties of these membranes differ significantly from those of conventional PVDF membranes. Specifically, the present membranes have greater liquid flow rates per unit area with equal particle retention as compared to conventionally-made PVDF membranes of the same pore size and thickness. This means that if a sample of a solution containing particles is passed through the membrane and an equal volume sample of the same solution is passed through a conventional membrane, both membranes will retain the same amount of material, but the membrane obtained by the process of the present invention will have a faster flow rate and process the liquid volume in a shorter time period. Moreover, compared to conventionally-made PVDF membranes, the present PVDF membranes have an increased surface area available at the point of contact between a molecule and the surface of the membrane. This means that a sorted molecule is more strongly held to the surface of present PVDF membranes. This is an advantage, for example, in immunodiagnostic applications where the goal is to cause small amounts of expensive molecules such as labelled reagents and tracers to be sorbed onto the surface of the membrane. These functional advantages are a direct result of the unique structural characteristics of the membranes of the present invention.

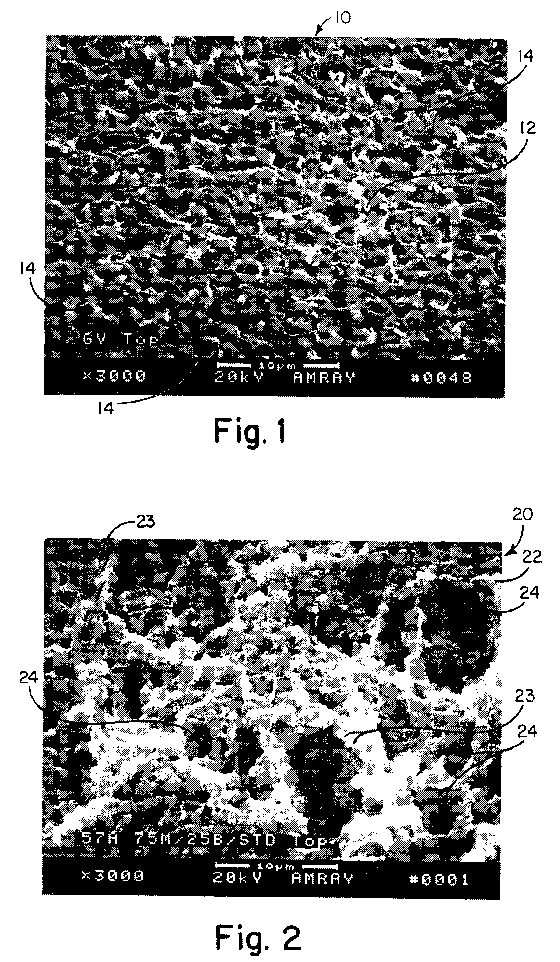

A scanning electron micrograph of a conventional PVDF microporous membrane (Millipore Corporation, Bedford, Massachusetts) of 0.22 μm nominal pore size is presented in Fig. 1. The surface morphology of this conventional PVDF microporous membrane 10 is characterized by the well-known features of microporous PVDF membranes; namely a foliate (i.e. leafy), substantially flat intertwined mesh 12 of polymeric material with a pore size determined during manufacture. These microporous membranes have a sponge-like matrix of intercommunicating passages penetrating from one side of the membrane to the other side of the membrane. These passages have a certain inner diameter, within narrow limits. The passages are referred to as pores 14. The pores provide a tortuous flow path for liquids. In conventional PVDF microporous membranes, the average width of the pores 14 as seen on the membrane surface ranges from about 0.1 μm about 2.0 μm depending on the particular membrane.

Referring now to Fig. 2, the top surface of a microporous PVDF membrane 20 obtained by the method of the present invention having a substantially identical pore size (0.22 μm) as the membrane of Fig. 1 is presented for comparison.

The top surface 22 shows a much more rounded aspect than does the conventional membrane (Fig. 1). This microstructural morphology appears as a plurality of globular bodies 23 attached to one another. The present membrane also has a unique macrostructure. The term "macrostructure" refers to morphological features of the present PVDF membranes that have dimensions substantially greater than the average pore size. Fig. 2 illustrates that, in contrast to the conventional PVDF membrane of Fig. 1, the top surface morphology of the present PVDF membrane takes on a more cratered or pocked aspect, in which the top surface morphology is arranged in roughly spheroidal, cratered constructions 24 having a scale size of the order of about 3-4 μm.

As discussed below, microporous membranes obtained by the method of the present invention are formed on solid substrates in one or more solvent-containing formation baths. As used herein, the term "top surface" refers to that surface of the microporous membrane that is not engaged with the solid substrate. Conversely, the term "bottom surface" as used herein refers to that surface of the microporous membrane that is engaged with the solid substrate during formation.

Without wishing to be bound by any particular theory, it is believed that the particular macrostructural morphology of Fig. 2 is due to the orientation of the PVDF molecule as the membrane is being formed in the process of the invention. Conventional membranes, as exemplified in Fig. 1, are believed to contain fluorine atoms as part of the PVDF molecules that are not ordered in any defined manner but are randomly dispersed in several directions; thus resulting in the intertwining surface configuration of Fig. 1. In contrast, the process of the present invention is believed to orient the bulk of the fluorine atoms of the PVDF molecules toward the outer surfaces (i.e. both top and bottom) of the forming membrane. This is believed to result in the cratered appearance.

Furthermore, it is believed that the surface orientation of the PVDF molecules results in a unique configuration of the middle of the membrane, which has a lower concentration of PVDF per unit membrane as compared to the surface regions. This means that less mass of PVDF is available to be converted into a matrix of intercommunicating flow channels. Consequently, the middle portion of the membrane is believed to have a less tortuous flow path.

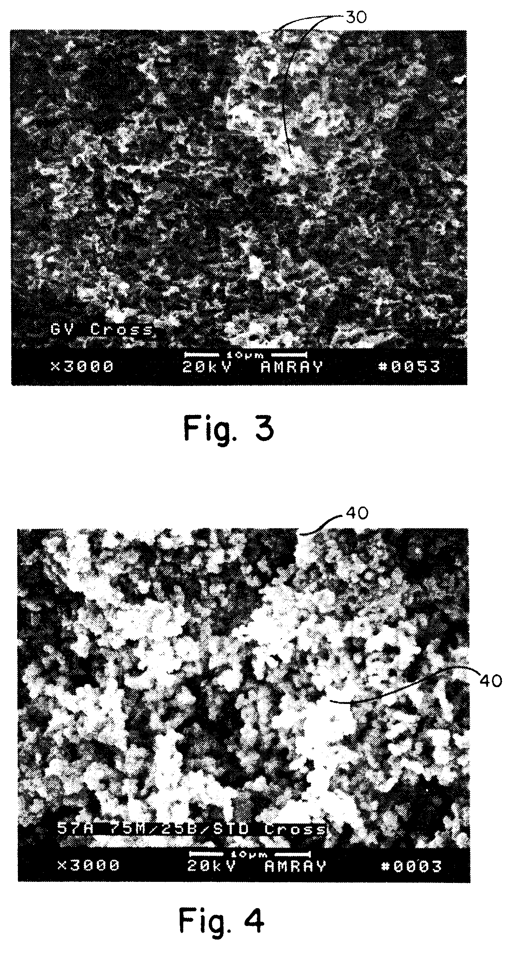

Fig. 3 is a vertical cross section through the same conventional microporous PVDF membrane as shown in Fig. 1. The interconnected surfaces 30 arranged parallel to the plane of the photograph are numerous, are arranged in close proximity to one another, and are densely packed in the interior of the membrane. It is believed that the more numerous and closer together these surfaces, the more convoluted the flow channels of the intact membrane.

In contrast, a cross-section (Fig. 4) through the same PVDF membrane as shown in surface view in Fig. 2 reveals that surfaces 40 parallel to the plane of the photograph are more globular and display the same cratered or pocked appearance as the surface morphology. This more open structure in the middle portions of the membrane is believed to be reflected as a less tortuous path of intercommunicating flow channels in the intact membrane. This results in a decrease in the physical length of a given flow channel from the top to the bottom of the membrane. The flow path a liquid travels when it traverses the present membrane is therefore much more direct than in the more tortuous channels of conventional membranes. This is believed to be the primary reason for the increased flow rate in certain of the present membranes as compared to conventional membranes of the same pore size, thickness and weight of polymer.

In addition to the altered flow path length, described above, another unique aspect of the macrostructure of the present membranes is an increased surface area. This is particularly advantageous in applications requiring transfer of one or more molecules to the membrane, since there is a greatly enhanced membrane surface area at the point of contact between a molecule resting on the surface of the PVDF membrane and the membrane itself. This is believed to result from the greater amount of surface PVDF than in conventional membranes. Because the surface area of PVDF polymer is high at the point of contact between a molecule and the membrane surface, it is believed that sorption of a molecule onto the surface of the present membrane from a target surface or another substrate will be enhanced. The increased polymer surface area available is reflected in the cratered or pocked macrostructural features, as illustrated in Fig. 2.

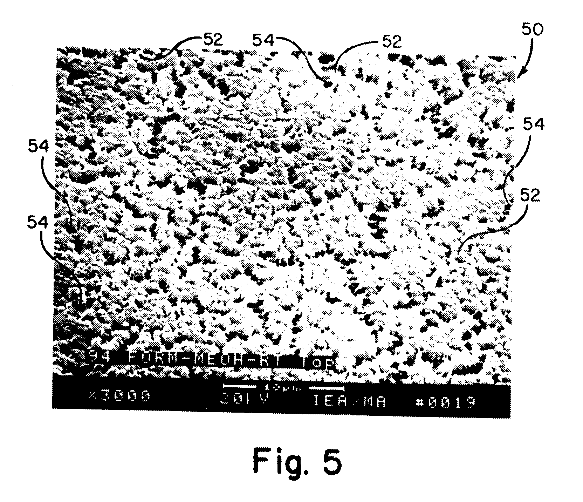

A second macrostructural morphology is illustrated by the top surface 50 of a PVDF membrane (0.10 μm pore size) shown in Fig. 5, This macrostructure accounts for an increased surface area as compared to conventional membranes. It is produced using a particular type of solvent, as discussed in more detail below.

Referring to Fig. 5, it can be clearly seen that the PVDF density of the membrane surface is greater than that in the conventional PVDF membrane of Fig. 1. The PVDF structure shown also lacks the interconnecting configuration as in conventional membranes and lacks the cratered appearance of the PVDF membrane of Fig. 2. The macrostructure illustrated in Fig. 5 is defined as being "flat" or "flattened". The flat PVDF structure of Fig. 5 can be represented as a plurality of small globular bodies or spheroidal nodules 52 that cover substantially the entire surface of the membrane. These nodules can vary in size. In the embodiment illustrated in Fig. 5, the nodules are less than about 1 micron in diameter. Many are on the order of tenths of microns in diameter.

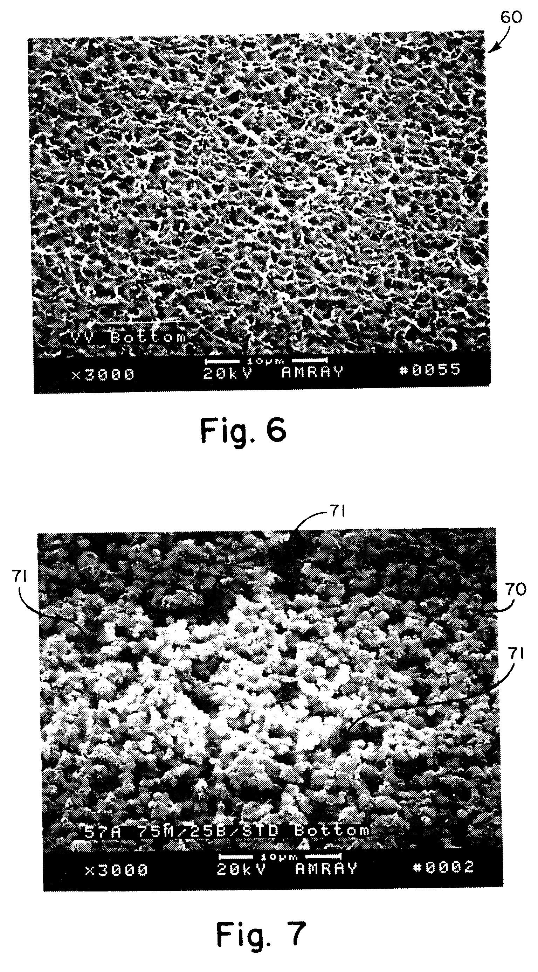

Figs. 6, and 7 are scanning electron micrographs of the bottom surfaces of various PVDF membranes. In particular, Fig. 6 is the bottom surface 60 of the conventional microporous PVDF membrane, the same membrane whose top surface is illustrated in Fig. 1. Both top and bottom surfaces of this conventional membrane look substantially the same. In contrast, Fig. 7 is a scanning electron micrograph of the bottom surface 70 of the present microporous PVDF membrane previously shown in top view (Fig. 2) and vertical cross-section (Fig. 4). The morphological features of a cratered macrostructure 71 and globular bodies are present. Nevertheless, these macrostructural features are less well-developed than on the top surface (see Fig. 2). It is believed this is due to the effect of the substrate that is in contact with the bottom surface of the membrane during formation.

One direct result of these unique morphological characteristics is an increased flow rate of the present PVDF membranes as compared to conventional membranes. Presented below in Table I is a comparison between the methanol bubble points and water flow rates of the present membranes and conventional PVDF membranes (Millipore Corp., Bedford, MA). The microporous PVDF membranes obtained by the method of the present invention significantly differ with respect to their water flow rate from conventional microporous PVDF membranes.

The methanol bubble points (measured in pounds per square inch above ambient atmospheric pressure) of the present PVDF membranes are not significantly different from the methanol bubble points of conventional PVDF membranes even though the flow rates are higher in the present PVDF membranes. (The term "methanol bubble point" is a well-known check on membrane performance. The bubble point test is based on the fact that liquid is held in the intercommunicating flow channels of microporous membranes by surface tension and that the minimum pressure required to force liquid out of the channels is a measure of the channel diameter. Briefly, a bubble point test is performed by prewetting the membrane with methanol on one side, applying air pressure on the other side of the membrane and watching for air bubbles emanating from the methanol-wetted side to indicate the passage of air through the membrane channels. The pressure at which a steady continuous stream of bubbles appears is the bubble point pressure). It will be appreciated that there may be an inverse relationship between the methanol bubble point and the pore diameter. Thus, for a given thickness of membrane, the higher the methanol bubble point, the smaller the effective pore diameter. The fact that the methanol bubble points are similar between the present membranes of Table I and conventional membranes suggests that the increased flow rates of the present membranes shown in Table I may be due to the present membranes having a greater number of flow channels of similar pore diameter or to flow channels with less tortuous configuration (or both) than those of conventional membranes.

TABLE I

| COMPARISON OF PREFERRED MICROPOROUS PVDF MEMBRANE WITH CONVENTIONALLY PRODUCED MICROPOROUS PVDF MEMBRANES | | | | |
|---|---|---|---|---|
| | Methanol Bubble Point (psi)* | | Water Flow Rate (ml/min/cm$^2$) | |
| Nominal Pore Size (µm) | Present Invention | Millipore | Present Invention | Millipore |
| 5.0 | --- | 2-3 | --- | 161 |
| 2.0 | 1.5-2 | --- | 125-190 | --- |
| 0.65 | 6-8 | 6-7 | 40-50 | 38 |
| 0.45 | 10-12 | 8-10 | 20-60 | 16 |
| 0.22 | 18-21 | 17-21 | 8-10 | 6.5 |
| 0.10 | 28-32 | 28-31 | 3.6-4 | 2.9 |
| 0.05 | 40-45 | --- | 1.5-2.0 | --- |
| 0.02 | 50-60 | --- | 0.50-0.65 | --- |

\* 1 psi = 6,89 kPa

Referring to Table I, the microporous PVDF membranes formed by the process of the present invention: (i) encompass a wider range of pore sizes as compared to currently available microporous PVDF membranes; (ii) have a flow rate substantially greater than the flow rate of conventionally-made membranes having identical thicknesses and pore sizes; and (iii) have a maximum flow rate (190 ml/min/cm$^2$) for a 2.0 nominal pore size that is not achieved even in a conventional microporous PVDF membrane having more than twice the pore size.

B. The Process of Manufacture

Conventional solvent-casting processes for making microporous PVDF membranes generally consist of: (i) applying a layer of a polyvinylidene fluoride polymer dissolved in a solvent to a support surface; (ii) forming a film of polymer on the support surface; and (iii) passing the surface carrying the polymer film through a formation bath containing a nonsolvent in which the nonsolvent displaces the solvent in the film to form the microporous membrane. The pore structure is determined by leaching of the solvent from the film and its replacement with the nonsolvent liquid.

In making the initial polymer solution, conventional procedures for making PVDF membranes often required a polymer resin to be dissolved in one solvent at an elevated temperature (of relatively narrow range). To provide the formation bath, a mixture of the same solvent with a nonsolvent is provided at the same temperature as the initial polymer solution. Moreover, in forming microporous membranes using other kinds of polymers, it has not been possible to use different initial dissolving temperatures and formation bath temperatures in a way that can predictably form a variety of microporous membrane products.

In contrast, the process of the present invention: (i) may utilize a range of solvent concentrations and temperatures to predictably form porous membranes of various pore size, polymer symmetry ratio, methanol bubble point, and water flow rate; (ii) is not constrained to a single solvent when using PVDF; (iii) does not require an initial PVDF polymer dissolution at substantial one elevated temperature; and (iv) does not require a formation bath at the same temperature as the initial solution.

Instead, the present method uses an initial solution of PVDF resin in a solvent/co-solvent mixture. Variation of the operating parameters such as temperature and solvent concentration gives precise and hitherto unknown control over pore size, polymer symmetry ratio, flow rate, surface morphology and thickness of the membrane.

Specifically, the temperature of the initial PVDF mixing solution, the temperature of the formation bath in which the microporous membrane is formed, and/or the relative concentration of solvents, can be selected from a range of possible temperatures and solvent concentrations to effect a wide range of structural and functional changes in the PVDF microporous membrane. The temperature of the formation bath can be substantially different than the temperature of the initial mixing solution. Specifically, one unique preferred aspect of the present invention is that the formation bath can be effectively used at temperatures at or below the freezing point of water (0°C).

## 1. Solvent Systems

Past attempts to make microporous PVDF membranes generally involve the use of solvent materials that are volatile and are toxic. A preferred conventional formulation solvent used to initially dissolve PVDF polymer is acetone. See Grandine II, US-A-4,203,848. Acetone is, however, only practical for use as a PVDF solvent at temperatures very close to its boiling point (50°C). At temperatures much below about 50°C, it is difficult to get enough PVDF resin into the acetone solution for practical purposes. Thus, conventional methods for forming PVDF membranes require that PVDF resin be passed into initial solution at temperatures near 50°C. This puts severe constraints on the final product since the temperature of the initial solution, it has been discovered, has a most significant effect on the final pore size and other structural features of the microporous PVDF membrane.

One unique aspect of making the present microporous PVDF membranes is use of solutions comprising a solvent and one or more co-solvents (i.e. a "solvent:co-solvent system"). The term "co-solvent" refers to organic solvents that dissolve PVDF resin slowly at most temperatures. Because of this, by themselves, many co-solvents are generally unsuitable for the methods of the present invention. They are often unsuitable for the additional reason that they tend to break down PVDF polymer, albeit slowly, to such an extent that the PVDF cannot reform or coagulate again in a conventional solvent-casting process.

This property of a co-solvent, surprisingly, can be utilized in the method of the present invention. A small amount of co-solvent added to the solvent permits the solvent casting procedure to be carried out over a wide range of formation bath temperatures; even including formation bath temperatures near zero degrees Celsius.

According to the present invention, the co-solvents are selected from formamide, methyl isobutyl ketone, cyclohexanone, diacetone alcohol, diisobutyl ketone, ethylacetoacetate, triethyl phosphate, propylene carbonate, glycol ethers and glycol ether esters. A particularly preferred co-solvent is n-butylacetate.

The term "solvent", refers to organic compounds that dissolve PVDF rapidly at most temperatures. This term includes those compounds that can yield a PVDF solution of at least 25% by weight. A preferred solvent of the present invention is N-methyl-2-pyrrolidone (hereinafter "N-pyrrol") although other solvents selected from dimethyl formamide, tetrahydrofuran methyl ethyl ketone, dimethylacetamide, tetramethyl urea, dimethyl sulfoxide and trimethyl phosphate can be used.

The initial dissolution of PVDF is done in a solvent:co-solvent system wherein the components are miscible with each other. In preferred embodiments, the solvent is about 95% N-pyrrol, the balance being one or more selected co-solvents.

In preferred embodiments, at least about 50% of the formation bath is a nonsolvent that is always miscible with the other components of the bath. The term "non-solvent" refers to organic compounds that do not substantially dissolve PVDF at any temperature. A portion of the same co-solvent that is in the initial PVDF dissolution mixture also is included. The preferred nonsolvent for use in the formation bath is methanol. Ethanol and butanol can also be used as nonsolvents, provided that the nonsolvent liquid is miscible with the other components in the formation bath.

## 2. Apparatus and Method

Apparatus and general methods for forming membranes according to the present invention are well-known to those of ordinary skill in the art. For example, techniques for making microporous membranes by hand are known. A polymer solution is coated on a glass plate, which plate is then immersed in a formation bath. After formation of the membrane, the glass plate is dried at an elevated temperature and the formed membrane removed from the plate. See, US-A-3,642,668 (Bailey: issued Feb. 1972). Microporous membranes described herein were made using this manual method.

Similarly, techniques for making PVDF membranes using a continuous process are also well-known. See for example, US-A-4,203,848 (Grandine, II: issued May 20, 1980). A conventional apparatus and process for continuous solvent-casting will be briefly described.

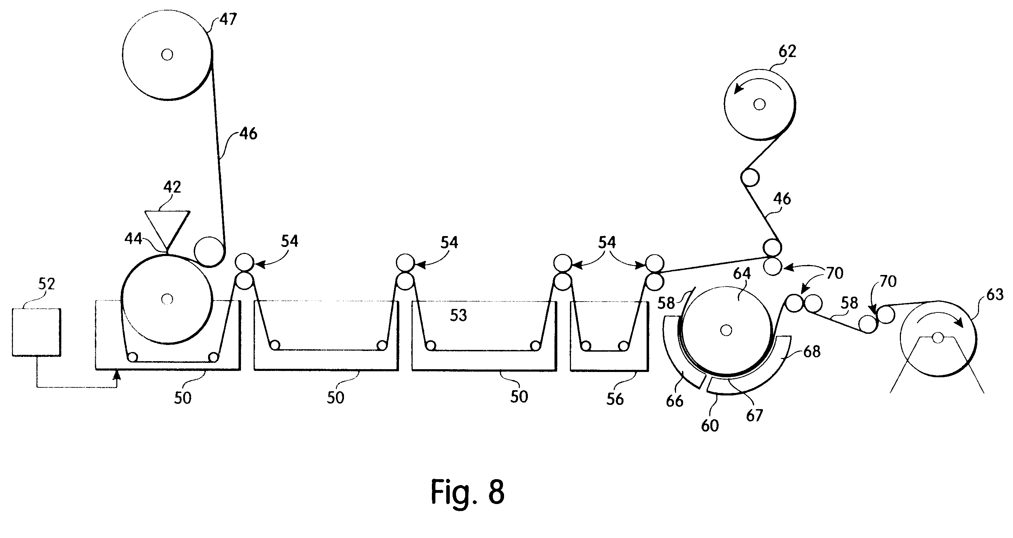

Referring to Fig. 8, equipment for production of the present PVDF membranes includes mixing bath 42 for holding a supply of a PVDF polymer or resin. The mixing bath contains the substantially dry PVDF polymer a first liquid that is a solvent for the polymer, and at least one liquid that is a co-solvent for the polymer, as defined in claim 1 Both solvent and co-solvent are miscible with the formation bath solution. In preferred embodiments of the invention, the first liquid solvent of the mixing bath is preferably N-pyrrol and the co-solvent is formamide and/or N-butylacetate.

The mixing bath is provided with apparatus such as a knife blade 44 for applying a film of the dissolved PVDF polymer solution at a substantially uniform thickness onto a substrate 46 that is nonporous, preferably a polyester. The substrate is carried on a roller 47. The substrate is driven through the remainder of the apparatus by a powered take up roll 62.

During operation of the process, substrate 46 is pulled through the system by takeup roll 62. As it travels through the system, substrate 46 passes beneath the mixing bath, which bath includes a coating blade as a knife that is set to a predetermined gap such as, for example, 300 μm. A film of polymer solution is applied at a substantially uniform thickness onto the substrate that travels from its supply roll to a position underneath the knife. The film of polymer solution that is applied to the substrate forms with that substrate a film-substrate laminate that is caused to travel directly into one or more formation baths.

The function of the formation bath is to convert the film to a porous membrane. The film-substrate laminate remains immersed in the formation bath until the pore structure is fully formed. The laminate then travels into extraction bath 56 where much of the solvent for the polymer that may remain in a porous membrane is displaced. It will be appreciated that, although Fig. 8 illustrates several formation bath tanks 50 and a single extraction bath 56, the number of formation baths will depend upon a variety of factors. Generally, more than one formation bath is required in order to ensure that as much of the solvent as possible is removed as possible prior to separation of the formed membrane from the substrate. Thus, the solvent displaced from the membrane into the formation bath will gradually enrich the formation bath. Each successive immersion in fresh formation bath liquid will drive more of the solvent from the membrane.

A heater (not shown) heats the solvent:co-solvent solution in the bath 42 to elevated temperatures. A mixer, also not shown, adds the polymer to the solution. A separate system 52 is provided for selective heating and cooling of formation bath liquid. Cooling the formation bath can be performed by any one of a number of conventional systems, preferably provided that the cooling system can decrease the temperature of the formation bath to at least 0°C, more preferably to about -10°C, and increase the temperature of the formation bath to about 50°C.

The formation bath is maintained substantially in one or more tanks 50 of generally rectangular shape. The formation bath is a liquid that is always miscible with the solvent and co-solvent but is a nonsolvent for the PVDF polymer. The liquid is preferably methanol. The remaining components of the preferred formation bath are compatible with the mixing bath and would include co-solvents such as formamide and N-butylacetate in various combinations. Any solvent present in the formation bath would be included as carry-over from the initial mixing solution.

A roller system is provided for guiding the layered substrate into, through, and out of the adjacent formation baths. Multiple baths are provided so that the layered substrate can move continuously from one bath to the other, the nonsolvent in successive formation baths gradually replacing the solvent and co-solvent from the PVDF film. Such baths have associated within them a plurality of submerged rollers 53 designed to maintain tension of the laminate as it passes through the formation bath. Pairs of rollers 54 are mounted adjacent to the formation baths and after the extraction bath 56. These also apply tension to the layered substrate as the substrate travels through this section. It would be appreciated that the exact configuration of these tensioning rollers is not critical to the operation of the present invention.

Extraction bath 56 is positioned adjacent to the last formation bath and is provided with a nonsolvent, preferably water. The microporous membrane 58 spontaneously separates from the moving substrate 46 when substantially all of the solvent has been displaced from the membrane and the membrane matrix is fully formed. This typically occurs in the extraction bath 56.

An extraction system 60 is positioned adjacent the final extraction bath and receives the microporous membrane 58. Extraction system 60 includes a drum 64 provided with a suction device 66 and spray head device 68. The membrane is disposed along an outer periphery of drum 64 in a substantially annular channel 67 formed by the drum and the inner surfaces of the suction 66 and spray head devices 68. Suction device 66 engages the membrane against the outer periphery of drum 64 and ensures that extraction liquid is sprayed uniformly on the membrane. The spray head 68 applies extraction liquid, preferably water, to the membrane. The water is applied under pressure and this helps to remove any remaining solvent and/or co-solvent from the pores of the membrane into the extraction system. It also removes loose particles of polymer that are on the surface of the membrane. This is important since any loose, surficial particles may cause punctures in the membrane if not removed at this stage.

After travelling through extraction bath 56, the membrane 58 can be separated from the substrate 46. Although Fig. 8 illustrates separation of the membrane after passage through a plurality of formation bath tanks, it will be appreciated that the separation of the membrane can be achieved in a single tank depending upon the solvent concentration and the amount of nonsolvent available to displace the solvent. Once separation occurs, the used substrate 46 is passed under a tension roll 70 and then onto a takeup roll 62. Membrane 58 is similarly passed through a series of membrane tension control rolls 70 to a driven windup roll 63.

Extraction system 60 provides for in-line extraction and drying. Membrane travels over the outer surface of drum 64. Suction is applied to the surface of the drum to constrain the membrane against shrinkage and movement. A series of spray heads is disposed along one arcuate segment of the drum to apply extraction liquid to the membrane and displace any solvent remaining in the membrane. When suction is used, all or part of the sprayed liquid is drawn directly through the membrane into the drum by the applied suction and any liquid that drips down may be caught in a separate tray (not shown).

In the final area of the drum, heat can be applied to the membrane. This may be accomplished by heating the drum using a device not shown such as an infrared heater, by blowing hot air onto the membrane, or by a combination of these and other steps. The dried membrane is then wound on a windup roll.

The final drying stage preferably involves a heat treatment. Such a so-called "annealing" step includes heating the membrane above its expected temperature of use to ensure that the membrane is dimensionally stable when used. The operating temperatures of PVDF membranes of the present invention range from about 0 to about 100°C. Since the polymer has a melting point of about 160°C, a good annealing temperature is about 130°C. The best annealing temperature is one that is closest to the melting point of a particular grade of PVDF without actually melting the polymer.

The invention will now be described further by means of several specific examples of preferred embodiments. In the following examples, all parts and percentages are by weight unless otherwise specified and temperatures are in degrees Celsius.

Example 1: Production of PVDF Microporous Membranes of Various Sizes

This example illustrates the unique versatility of the present manufacturing process and its ability to manufacture microporous PVDF membranes using control of temperature and preselected solvent composition to produce desired membrane characteristics.

The membranes were formed by hand on 6" x 8" (1" = 2,54 cm) glass plates using conventional procedures. Briefly, an initial solution of PVDF polymer, solvent and co-solvent were mixed and applied to the glass plate using a coating blade having a gap width of 15 thousands of an inch (1 inch = 2,54 cm). The coated, glass plate was immersed in a formation solution and the membrane was allowed to form on the glass plate. Once formed, the membranes were dried at about 50°C on the glass plates and membrane discs were produced using a 47 mm diameter punch. The membrane thickness was measured as well as the water flow rate (ml/min/cm$^2$) and methanol bubble point (psi) using standard procedures.

A. Effect of Mixing Temperature and Co-Solvent Composition

An initial weight of PVDF polymer (see below) was mixed with 94-95% N-pyrrol and 5-6% N-butylacetate at temperatures of 20°C, 35°C, 40°C, and 45°C. The formation bath (about 20°C) contained a series of methanol (nonsolvent) and N-pyrrol or butylacetate (co-solvent) concentrations. After the PVDF polymer was dissolved at different initial temperatures, membranes were formed in these different formation bath solutions. The thickness, water flow rate, and methanol bubble point of the membranes produced under these various conditions was determined on the extracted and dried membranes. The results for measurement of the water flow rate are presented below in Table II for 375-398 g Kynar$^®$ 761 PVDF, (Atochem North America, Philadelphia, PA), used at different mixing solution temperatures and different solvent:co-solvent concentrations of the formation bath (20°C). Results for water flow measurement are presented in Table III for 375-398 g Kynar$^®$ 761 PVDF used at different mixing solution temperatures and different solvent:co-solvent concentrations in the formation bath (20°C).

TABLE II

| Flow Rate (ml/min/cm$^2$) (mean ± s.e) | | | |
|---|---|---|---|
| Mixing Temperature (°C) | MeOH (100%) comparative | MeOH:BA$^a$ (90:10) invention | MeOH:N-Pyrrol (90:10) comparative |
| 20 | 0.40 | 0.50 | 1.8 |
| | 0.39 | 0.53 | 1.7 |
| | $\overline{0.395}$ ± .007 | $\overline{0.515}$ ± 0.02 | $1.\overline{75}$ ± .007 |
| 35 | 1.9 | 4.2 | 2.1 |
| | 1.6 | 4.1 | 2.5 |
| | $\overline{1.75}$ ± 0.21 | $\overline{4.15}$ ± .007 | $2.\overline{3}$ ± .28 |
| Thickness mean ± s.e) | | | |
| 20°C | 160 | 100 | 112 |
| | 161 | 100 | 114 |
| | $\overline{160}$.5 ± .007 | $\overline{100}$ | $\overline{113}$ ± 1.4 |
| 35°C | 100 | 102 | 96 |
| | 100 | 105 | 101 |
| | $\overline{100}$ | $\overline{103}$.5 ± 2.1 | $\overline{98}$.5 ± 3.5 |
| Bubble Point (psi) (mean ± s.e.)* | | | |
| 20°C | 57 | 52 | 37 |
| | 58 | 51 | 38 |
| | $\overline{57}$.5 ± .70 | $\overline{51}$.5 ± .70 | $3\overline{7}$.5 ± .70 |
| 35°C | 36 | 32 | 35 |
| | 40 | 31 | 37 |
| | $\overline{38}$ ± 2.8 | $\overline{31}$.5 ± .70 | $3\overline{6}$ ± 1.4 |

a. MeOH = methanol; BA = n-butylacetate
* 1 psi = 6,89 kPa

TABLE III

| Mixing Temp. (°C) | Methanol (100%) comparative | MeOH:BA[a] (90:10) | MeOH:BA (80:20) | MeOH:BA (75:25) | MeOH:BA:$H_2O$ (55:25:20) com- parative |
|---|---|---|---|---|---|
| | Water Flow (ml/min/cm$^2$) | | | | |
| 20 | 1.6 | 3.2 | 5.0 | 5.4 | 4.3 |
| | 1.5 | 4.1 | | 4.4 | 4.6 |
| | 1.2 | | | | |
| | 1.1 | | | | |
| 35 | 5.1 | 7.3 | 6.2 | 9.5 | |
| | 4.2 | 7.8 | | 10.0 | |
| | 5.1 | 7.3 | | 9.4 | 12 |
| | 4.9 | | | | |
| | 4.3 | | | | |
| | 4.5 | | | | |
| 40 | 20 | | 23 | | |
| | | | 23 | | |
| | | | 27 | | |
| 45 | 173 | | 173 | | |
| | 161 | | | | |
| | 156 | | | | |

a. MeOH = methanol; BA = n-butylacetate

B. <u>Effect of Formation Bath Temperature and Formamide</u>

A series of initial mixing solutions were made up at 40°C as follows:

<u>Solution A</u>:

Kynar®761: 400 g
N-pyrrol: 2250 g
n-butylacetate: 100 g
Formamide: 100 g
solids = 14% of total weight

<u>Solution B</u>:

Kynar®761: 400 g
N-pyrrol: 2350 g
Formamide: 100 g
solids = 14% of total weight

Membranes were formed in temperature-controlled formation baths at 0°C and 20°C. In addition, the formation bath contained a series of decreasing methanol concentrations and increasing formamide concentrations (100% MeOH; 75:25 and 50:50 MeOH:Formamide). Membranes were formed, removed from the plate, and dried as above and their water flow rate, thickness and methanol bubble point were measured. Results are presented in Table IV. The dashed line indicates that a membrane did not form.

Use of formamide as a co-solvent results in formation of a PVDF membrane having the flattened macrostructure of Fig. 5.

TABLE IV

| Water Flow (ml/min/cm$^2$) | | | | | | |
|---|---|---|---|---|---|---|
| Formation Bath (°C) | (comparative) Methanol (100%) | | 75% MeOH:25% Formamide | | 50% MeOH:50% Formamide | |
| | A | B | A | B | A | B |
| 0 | 20 | 6.4 | 14 | 6.6 | - | - |
| | | | 17 | | | |
| 20 | 0.35 | 1.8 | 0.4 | 5.0 | Membrane Collapsed | 2.1 |
| Thickness | | | | | | |
| 0 | 88 | 86 | 167 | 139 | - | - |
| | | | 82 | | | |
| 20 | 81 | 86 | 70 | 147 | - | 83 |
| Bubble Point (psi)* | | | | | | |
| 0 | 12 | 23 | 17 | 25 | - | - |
| | | | 14 | | | |
| 20 | 60 | 35 | 65 | 30 | - | 34 |

Initial mixing solution:
A. N-pyrrol/Butylacetate/Formamide
B. N-pyrrol/Formamide

* 1 psi = 6,89 kPa

RESULTS AND DISCUSSION: Operating Parameters

From these data, some qualitative observations can be made. The co-solvent composition of the formation bath can have a profound effect on flow rate, with presence of co-solvent slightly lowering the bubble point, but dramatically raising the flow rate, particularly at low formation bath temperatures (Tables II and III). This effect of co-solvent does not extend indefinitely, however, and if concentrations of co-solvent (especially formamide) are much greater than about 25% by weight, the membrane either cannot form or tends to become thinner and more fragile (Table IV).

The temperature of the initial mixture prior to formation appears to have a great influence on membrane properties (Tables II and III). For any given formation bath composition, the bubble point is lowered by increasing the temperature of the initial mixing solution (Table II). This results in a dramatic increase in flow rate as the mixing solution temperature is increased from 20°C to 45°C (Table III).

Moreover, the temperature of the formation bath also has a significant effect on the membrane properties, particularly with co-solvents such as N-butylacetate and formamide. As the formation bath temperature increases, the resulting membrane shows a decreased water flow rate and increased bubble point (Table IV). Cooling the formation bath down to about 0°C while the membrane is being formed results in the opposite effect; a significantly decreased bubble point and increased flow rate (Table IV).

Generally, a warmer mixing solution and formation bath results in significantly increased rate of exchange of non-solvent for co-solvent in the pores of the forming membrane than at lower temperatures. Further, the dissolution of the polymer in the initial solvent is also faster at higher temperatures. This may result in a higher number of intercommunicating flow channels and a more tortuous flow path for liquid travel. This is reflected in the higher methanol bubble point.

In the Examples, several different values were employed for some of the more important operating parameters. These values have been proven to produce effective microporous membranes by many successful demonstrations. Preferred operating ranges for some of these parameters include a PVDF polymer concentration in the range of between about 14% to 24% by weight of the initial mixing solution at a preferred temperature range of between about 20°C and about 50°C. The initial solution preferably contains this weight of PVDF polymer in a mixture of 95% N-pyrrol

EP 0 639 106 B1

and 5% butylacetate. The most preferred operating conditions for production of PVDF membranes of the present invention have a co-solvent concentration in the formation bath no greater than about 30%. The formation bath solution is made up at a temperature in the range of -10°C to 50°C.

INDUSTRIAL APPLICABILITY

Microporous membranes prepared in accordance with the present invention that are produced in accordance herewith are particularly useful in the chemical, food and pharmaceutical industries. One particular use in forming filters with pore sizes on the order of about 0.1 µm or less is that the membrane may be used for removal of viruses and large macromolecules from the fluids being processed through the membrane. Because PVDF is chemically inert, the membrane may be steamed sterilized repeatedly.

Another useful industrial application of the present membranes is in tangential or cross-flow filtration systems. In tangential or cross-flow filtration systems, not all of the liquid volume goes through the membrane. Some fraction of the filtrate volume can be removed and recycled. Tangential flow systems characteristically use tube-shaped filters or cartridges where the flow is moved axially through the tube and material is released transversely across the walls of the tube. Tangential flow can be used at lower pressures than normal filtration and the longevity of the filter is enhanced in this way. Because the flow rates of the present membranes are significantly faster than those of conventional membranes of equal thickness, tangential flow using the present membranes is particularly advantageous because the time for processing a given volume of sample having a given particle concentration will be much faster than processing using conventional membranes.

Furthermore, membranes can be produced according to the present invention as a polyester supported PVDF membrane where the polyester is encapsulated as the PVDF membrane is formed. A particularly preferred type of PVDF membrane obtainable by the process of the present invention, however, is a PVDF fibrous support in which the PVDF fibers are integrally formed with the PVDF polymer as the microporous membrane is produced.

**Claims**

1. A method of making a microporous membrane, comprising:

   a) providing a solution comprising polyvinylidene fluoride polymer and a solvent cosolvent mixture, said solvent cosolvent mixture comprising a solvent for the polyvinylidene fluoride polymer selected from N-methyl-2-pyrrolidone, dimethyl formamide, tetrahydrofuran, methyl ethyl ketone, dimethyl acetamide, tetramethyl urea dimethyl sulfoxide and trimethyl phosphate, and at least one cosolvent being selected from formamide, methyl isobutyl ketone, cyclohexanone, diacetone alcohol, diisobutyl ketone, ethyl acetoacetate, triethyl phosphate, propylene carbonate, glycol ethers, glycol ether esters and n-butylacetate;
   b) spreading said solution on a solid surface to form a thin film of said solution;
   c) displacing said solvent cosolvent mixture from said thin film with a formation bath, said formation bath comprising said cosolvent and a non-solvent, said nonsolvent being miscible with said solvent and cosolvent and being selected from methanol, ethanol and butanol, said polyvinylidene polymer forming a microporous membrane as said solvent cosolvent mixture is displaced by said formation bath; and
   d) separating said porous membrane from said solid surface.

2. The method of claim 1 wherein said formation bath is removed from said porous membrane.

3. The method of claim 2 wherein said formation bath is removed by washing said microporous membrane with water.

4. The method of claim 3 wherein said microporous membrane is dried to remove said water.

5. The method of claim 1 wherein said first solution comprises 14 to 24% polyvinylidene fluoride.

6. The method of claim 1 wherein said solvent is N-methyl-2-pyrrolidone.

7. The method of claim 1 wherein said cosolvent is n-butylacetate.

8. The method of claim 1 wherein said solvent: cosolvent mixture is 95% N-methyl-2-pyrrolidone and 5% n-butylacetate.

9. The method of claim 1 wherein said first solution is maintained at a temperature of about 20°C to 50°C.

13

**10.** The method of claim 1 wherein said nonsolvent is methanol.

**11.** The method of claim 1 wherein said formation bath is n-butylacetate and methanol.

**12.** The method of claim 11 wherein said butylacetate comprises no more than 30% of said formation bath.

**13.** The method of claim 1 wherein said formation bath has a temperature in the range of -10°C to 50°C.

**Patentansprüche**

**1.** Verfahren zur Herstellung einer mikroporösen Membran, das folgendes umfaßt;

a) Bereitstellen einer Lösung, die Polyvinylidenfluorid-Polymer und eine Lösungsmittel-Kolösungsmittel-Mischung umfaßt, wobei die Lösungsmittel-Kolösungsmittel-Mischung ein Lösungsmittel für das Polyvinylidenfluorid-Polymer, das aus N-Methyl-2-pyrrolidon, Dimethylformamid,Tetrahydrofuran, Methylethylketon, Dimethylacetamid, Tetramethylharnstoff, Dimethylsulfoxid und Trimethylphosphat ausgewählt ist, und zumindest ein Kolösungsmittel umfaßt, das aus Formamid, Methylisobutylketon, Cyclohexanon, Diaceton-Alkohol, Diisobutylketon, Ethylacetacetat, Triethylphosphat, Propylencarbonat, Glykolethern, Glykoletherestern und N-Butylacetat ausgewählt

b) Ausbreiten dieser Lösung auf einer festen Oberfläche, um einen dünnen Film der Lösung zu bilden;

c) Verdrängen der Lösungsmittel-Kolösungsmittel-Mischung von diesem dünnen Film mit einem Entwicklungsbad, wobei das Entwicklungsbad das Kolösungsmittel und ein Nichtlösungsmittel umfaßt, wobei das Nichtlösungsmittel mit dem Lösungsmittel und dem Kolösungsmittel mischbar ist, und aus Methanol, Ethanol und Butanol ausgewählt ist, wobei das Polyvinyliden-Polymer eine mikroporöse Membran bildet, wenn die Lösungsmittel-Kolösungmittel-Mischung durch das Entwicklungsbad verdrängt wird; und

d) Trennender porösen Membran von der festen Oberfläche.

**2.** Verfahren nach Anspruch 1,
bei dem das Entwicklungsbad von der porösen Membran entfernt wird.

**3.** Verfahren nach Anspruch 2,
bei dem das Entwicklungsbad durch Waschen der mikroporösen Membran mit Wasser entfernt wird.

**4.** Verfahren nach Anspruch 3,
bei dem die mikroporöse Membran getrocknet wird, um das Wasser zu entfernen.

**5.** Verfahren nach Anspruch 1,
bei dem die erste Lösung 14 bis 24 % Polyvinylidenfluorid umfaßt.

**6.** Verfahren nach Anspruch 1,
bei dem das Lösungsmittel N-Methyl-2-Pyrrolidon ist.

**7.** Verfahren nach Anspruch 1,
bei dem das Kolösungsmittel N-Butylacetat ist.

**8.** Verfahren nach Anspruch 1,
bei dem die Lösungsmittel: Kolösungsmittel-Mischung 95 % N-Methyl-2-pyrrolidon und 5 % n-butylacetat ist.

**9.** Verfahren nach Anspruch 1, bei dem die erste Lösung bei einer Temperatur von ungefähr
20°C bis 50°C gehalten wird.

**10.** Verfahren nach Anspruch 1,
bei dem das Nichtlösungsmittel Methanol ist.

**11.** Verfahren nach Anspruch 1,

bei dem das Entwicklungsbad n-butylacetat und Methanol ist.

**12.** Verfahren nach Anspruch 11,
bei dem das Butylacetat nicht mehr als 30 % des Entwicklungsbades umfaßt.

**13.** Verfahren nach Anspruch 1,
bei dem das Entwicklungsbad eine Temperatur im Bereich von -10°C bis 50°C aufweist.

**Revendications**

**1.** Procédé de fabrication de membrane microporeuse consistant à :

a) fournir une solution comprenant un polymère de fluorure de polyvinylidène et un mélange solvant cosolvant, ledit mélange solvant cosolvant comprenant un solvant pour le polymère de fluorure de polyvinylidène choisi parmi le N-méthyl-2-pyrrolidone, le diméthylformamide, le tétrahydrofurane, la méthyléthylcétone, le diméthylacétamide, le tétraméthylurée, le diméthylsulfoxyde et le triméthylphosphate, et au moins un cosolvant choisi parmi le formamide, le méthylisobutylcétone , la cyclohéxanone, le diacétone alcool, la diisobutylcétone, l'éthylacétoacétate, le triéthylphosphate, le propylènecarbonate, les glycolethers, les esters du glycoléther et le N-butylacétate;
b) étaler ladite solution sur une surface solide pour former un film mince de ladite solution;
c) déplacer ledit mélange solvant cosolvant à partir dudit film mince avec un bain de formation, ledit bain de formation comprenant ledit cosolvant et un non solvant, ledit non solvant étant miscible avec le solvant et le cosolvant et étant choisi parmi la méthanol, l'éthanol et le butanol, ledit polymère de polyvinylidène formant une membrane microporeuse pendant que ledit mélange solvant cosolvant est déplacé par ledit bain de formation; et
d) séparer ladite membrane poreuse de ladite surface solide.

**2.** Procédé selon la revendication 1, caractérisé en ce que ledit bain de formation est extrait de ladite membrane poreuse.

**3.** Procédé selon la revendication 2, caractérisé en ce que ledit bain de formation est extrait en lavant ladite membrane microporeuse avec de l'eau.

**4.** Procédé selon la revendication 3, caractérisé en ce que ladite membrane microporeuse eut séchée pour enlever ladite eau.

**5.** Procédé selon la revendication 1, caractérisé en ce que ladite solution comprend de 14 à 24% de fluorure de polyvinylidène.

**6.** Procédé selon la revendication 1, caractérisé en ce que ledit solvant est le N-méthyl-2-pyrrolidone.

**7.** Procédé selon la revendication 1, caractérisé en ce que ledit cosolvant est du n-butylacétate.

**8.** Procédé selon la revendication 1, caractérisé en ce que ledit mélange solvant cosolvant est 95% de N-méthyl-2-pyrrolidone et 5% de n-butylacétate.

**9.** Procédé selon la revendication 1, caractérisé on ce que ladite solution est maintenue à une température d'environ 20°C à 50°C.

**10.** Procédé selon la revendication 1, caractérisé en ce que le non-solvant est du méthanol.

**11.** Procédé selon la revendication 1, caractérisé en ce que ledit bain de formation est du n-butylacétate et du méthanol.

**12.** Procédé selon la revendication 11, caractérisé en ce que le butylacétate ne comprend pas plus de 30% dudit bain de formation.

**13.** Procédé selon la revendication 1, caractérisé en ce que ledit bain de formation a une température dans l'intervalle -10°c à 50°C.

**Fig. 1**

**Fig. 2**

Fig. 3

Fig. 4

Fig. 5

Fig. 6

Fig. 7

Fig. 8